# EUROPEAN PATENT SPECIFICATION

(11) **EP 3 642 805 B1**
(45) Date of publication and mention of the grant of the patent: **17.09.2025**
(21) Application number: 18740901.6
(22) Date of filing: 19.06.2018
(51) Int. Cl.: G07B 15/02, G06Q 20/14, G08G 1/127, G06Q 20/32, G07F 17/00

(54) **SYSTEM AND METHOD FOR AUTOMATIC PAYMENT OF A PUBLIC TRANSPORT SERVICE**
SYSTEM UND VERFAHREN ZUR AUTOMATISCHEN BEZAHLUNG EINES ÖFFENTLICHEN TRANSPORTDIENSTES
SYSTÈME ET PROCÉDÉ DE PAIEMENT AUTOMATIQUE D'UN SERVICE DE TRANSPORT PUBLIC

(30) Priority: 20.06.2017 IT 201700068503
(43) Date of publication of application: 29.04.2020
(73) Proprietor: MOVYON S.p.A., 00159 Roma (IT)
(72) Inventor: BANDINELLI, Francesco, 00159 Roma (IT)
(74) Representative: Colombo, Stefano Paolo
(86) International application number: PCT/IB2018/054495
(87) International publication number: WO 2018/234982

(56) References cited:
- EP-A1- 1 669 935
- EP-A1- 3 073 451
- EP-A1- 3 109 818
- WO-A1-2012/114598
- WO-A1-2015/096379
- WO-A1-2016/175821
- CN-A- 106 548 334
- US-A1- 2012 041 675
- US-A1- 2014 188 788

## Description

### Technical field

The present invention relates in general to the field of public transport services. More particularly, the present invention relates to a method and a system for automatic payment of a public transport service.

### Background art

When a user makes use of a public transport service offered by a public transport vehicle (bus, tram, underground train, taxi, etc.) generally it is envisaged that the user must make a payment for using the service.

If the cost of the service is fixed (as is generally the case when travelling on a bus, tram or underground train), the user may pay for the service before using it, for example buying a ticket and then validating it before boarding or once he/she has boarded the public transport vehicle. If, instead, the cost of the service depends on the duration of the service (as generally is the case with taxis) the user may pay for the service after using it, typically paying the driver directly using payments means accepted by the latter (cash, POS terminals, etc.).

CN 106 548 334 discloses an intelligent public transport payment method comprising: current position information of a user is obtained, and information of at least one bus in a preset radius scope of a current position is searched; according to the information of the at least one bus, a bus taken by the user is determined; fare is paid to a card swiping device installed on the bus taken by the user.

### Summary of the invention

The Applicant has perceived the need to provide a method and a system for automatic payment of a public transport service, which allows the payment to be made without the user having to purchase and validate tickets or use cash.

According to embodiments of the present invention, this object is achieved by a system according to claim 1 and a method according to claim 9 for automatic payment of a public transport service, which comprise a first communication device installed on the public transport vehicle and a second portable communication device which the user carries on their person. Both the communication devices periodically send data relating to their geographical positions to a management server in a synchronized manner. Based on the data received from the communication devices, the management server periodically determines the speed of the public transport vehicle and the user and, when they coincide after being different, it determines that the user has boarded the public transport vehicle; when the periodically determined speeds no longer coincide, the management server determines that the user has got off the public transport vehicle. Then, the management server calculates the amount to be paid based on the position of user or vehicle when it determined that the user has boarded the vehicle, and on the position of user or vehicle when it determined that the user has got off the vehicle. The management server then sends to a payment system to which the user is subscribed a request for payment of the public transport service.

In this way, advantageously, the payment of the public transport service is performed automatically, without the user having to perform substantially any operation. In particular, this system of payment of the service is particularly convenient for the user who does not have to pay for and validate any ticket nor make any manual payment using cash or debit card.

Moreover, advantageously, payment of the public transport service according to the present invention does not require the public transport service operator to provide any structure for the sale of payment vouchers (automatic ticket machines, dedicated sales points, etc.).

According to aspects of the present invention, a system and a method are provided according to the appended claims.

### Brief description of the drawings

The present invention will become clearer from the following detailed description, provided by way of a non-limiting example, with reference to the accompanying drawings, in which:
- Figure 1 shows in schematic form a system for automatic payment of a public transport service, according to an embodiment of the present invention;
- Figure 2 shows in greater detail the structure of the first communication device comprised in the system shown in Figure 1;
- Figure 3 shows in greater detail the structure of the second communication device comprised in the system shown in Figure 1;
- Figure 4 is a flow chart of the method for automatic payment of a public transport service, according to an embodiment of the present invention;
- Figures 5a and 5b illustrate in schematic form the operating principle of the system; and
- Figure 6 is a flow chart of the method for automatic payment of a public transport service, according to a variant.

### Detailed description of embodiments of invention

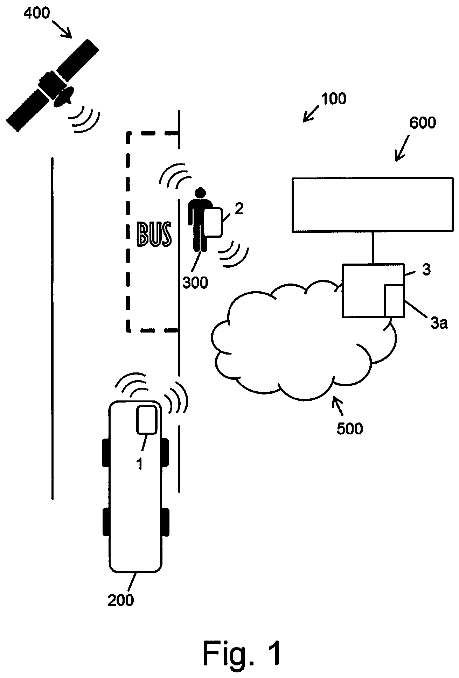

Figure 1 shows in schematic form a system 100 for automatic payment of a public transport service, according to an embodiment of the present invention.

The system 100 comprises a first communication device 1, a second communication device 2 and a management server 3.

The first communication device 1 is fixed preferably in a non-removable manner to a public transport vehicle 200, for example a bus, a tram, an underground train or a taxi. The second communication device 2 is a portable device which a user 300 who intends using the public transport service carries on their person, for example a smartphone.

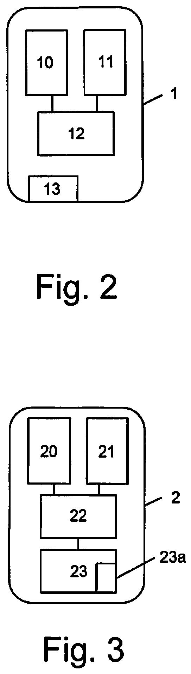

As shown in Figure 2, the first communication device 1 preferably comprises a satellite receiver 10, a radio communication module 11 and a battery 12. The satellite receiver 10 is configured to interact with a geolocation system 400 schematically shown in Figure 1, such as a GPS (Global Positioning System), Galileo or Glonass, in order to detect the geographical position of the device 1. The radio communication module 11 is instead configured to transmit via radio to the management server 3 via a communication network 500 data relating to the geographical position of the device 1 as detected by the satellite receiver 10. For example, the radio communication module 11 may comprise a SIM (Subscriber Identity Module) card and a cellular transmitter/receiver able to communicate with the management server 3 by means of a mobile radio communications network included in the communication network 500. Alternatively, the radio communication module 11 may comprise a Wi-Fi or LoRa (Long Range) transceiver able to communicate with corresponding access devices of the communication network 500. The battery 12 is electrically connected both to the satellite receiver 10 and to the radio communication module 11, so as to power them and allow them to perform the operations described above. Preferably, the first communication device 1 also comprises an access interface 13 which allows for example uploading of any updates for the software of the device 1 without necessarily having to use the radio communication module 11. This access interface 13 preferably is a USB (Universal Serial Bus) interface.

As schematically shown in Figure 3, the second communication device 2 preferably comprises a satellite receiver 20, a radio communication module 21 and a battery 22. Also the satellite receiver 20 is configured to interact with the geolocation system 400, in order to detect the geographical position of the device 2. The radio communication module 21 is instead configured to transmit via radio to the management server 3, by means of the communication network 500, data relating to the geographical position of the device 2 as detected by the satellite receiver 20. For example, the radio communication module 21 may comprise a **SIM** (Subscriber Identity Module) card and a cellular transceiver able to communicate with the management server 3 by means of a mobile radio communications network included in the communication network 500. Alternatively, the radio communication module 21 may comprise a Wi-Fi or LoRa (Long Range) transceiver able to communicate with corresponding access devices of the communication network 500. The battery 22 is electrically connected both to the satellite receiver 20 and to the radio communication module 21 so as to power them and allow them to perform the operations described above. Preferably, the second communication device 2 also comprises a processor 23 and a client software application 23a run by this processor. The client application 23a, when run by the processor 23, controls operation of the satellite receiver 20 and the radio communication module 21 so as to support the execution of the payment method according to the present invention, as will be described in greater detail below.

Preferably, the client application 23a must be installed on the communication device 2 before the first access to the method for automatic payment of the public transport service according to the present invention. The client application 23a is preferably an app which can be downloaded from an app store (Google Play, App Store Apple, etc.). When first activated on the communication device 2, the client application 23a preferably offers the user 300 a graphical interface via which the user 300 is required to supply his/her personal data and payment details (relating to a credit card, Telepass account, Paypal account, etc.). Upon first activation, preferably, the user 300 is also required to choose a unique account identifier which will be sent to the management server 3. The data supplied by the user during first activation is preferably sent immediately from the communication device 2 to the management server 3 (for example via the communication module 11 and the communication network 500) in order to allow the latter to manage the payment method according to the present invention, as will be described in greater detail hereinbelow.

The management server 3 may be implemented as a single processor, or a network of processors, or by means of cloud computing technology. It is preferably configured to run a server software application 3a. When it is run, the server application 3a receives and processes the data relating to the geographical positions of the communication devices 1 and 2 transmitted respectively from the radio communication modules 11 and 21 via the communication network 500, determines whether the user 300 is on board the transport vehicle 200 and interacts with a payment system 600 (for example the payment system of a credit card circuit, or Telepass system, Paypal, etc.) to which the user 300 is subscribed. The server application 3a run by the management server 3 is moreover designed to control the operation of the first communication device 1, as will be described in greater detail hereinbelow.

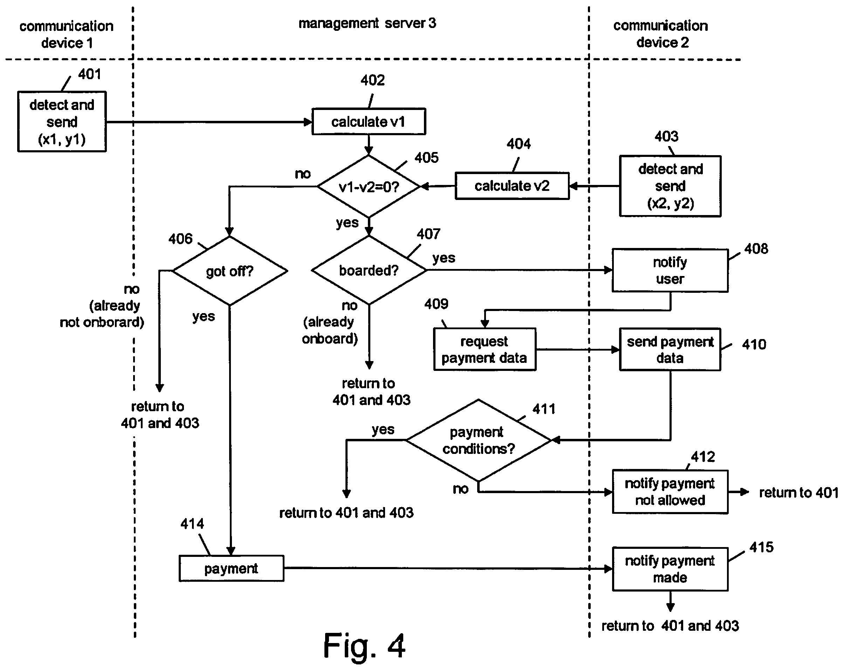

With reference to Figure 4, the method of automatic payment of a public transport service implemented by the system 100, according to an embodiment of the present invention, will now be described in greater detail.

As mentioned above, the server application 3a run by the management server 3 is designed to control the operation of the first communication device 1. In particular, the server application 3a preferably controls the operation of the satellite receiver 10 and the radio communication module 11 so that these periodically detect the geographical position of the device 1 (substantially coinciding with that of the transport vehicle 200) by interacting with the geolocation system 400 and send data relating to each detected position to the management server 3 via the communication network 500 (step 401). This data is preferably in the form of geographical coordinates (x1; y1) of the communication device 1, where x1 indicates the latitude of the device 1 and y1 indicates the longitude of the device 1. The data (x1; y1) relating to the geographical position of the device 1 is preferably accompanied by an identifier of the communication device 1. The data (x1; y1) is preferably detected and transmitted every T seconds, where T is preferably comprised between 1 second and 5 seconds. The duration T of the period for detection of the position is controlled by the server application 3a. The management server 3 therefore constantly receives the data (x1; y1) every T seconds.

In each position detection period, the server application 3a preferably uses the last data (x1; y1) received in combination with the previous data in order to calculate - using known formulae - the instantaneous speed v1 of the communication device 1 (step 402). This speed v1 is calculated along two dimensions, namely a component v1x thereof along the direction x (latitude) and a component v1y thereof along the direction y (longitude) are calculated. In this way, the server application 3a knows not only the modulus of the instantaneous speed v1 of the communication device 1 (and therefore of the public transport vehicle 200), but also its direction and its sense.

When the user 300 decides to use the method for automatic payment of the public transport service according to the present invention, he/she preferably starts the client application 23a on his/her device. At start-up, the client application 23a preferably checks the operation of the satellite receiver 20 and the radio communication module 21 so that the latter starts to periodically detect the geographical position of the device 2 (substantially coinciding with that of the user 300) by interacting with the geolocation system 400 and to send data relating to each position detected to the management server 3 via the communication network 500 (step 403). This data is also preferably in the form of geographical coordinates (x2; y2) of the communication device 2, where x2 indicates the latitude of the device 2 and y2 indicates the longitude of the device 2. The data (x2; y2) relating to the geographical position of the device 2 is preferably accompanied by an identifier of the communication device 2 (for example the **IMEI** of the communication device 2) and by the aforementioned unique account identifier. The latter may be used by the server application 3a in order to provide the user 300 with any communications regarding for example the routes, tariffs, usual events, etc. The data (x2; y2) is also detected and transmitted preferably every T seconds, where T is the same detection period used by the communication device 1 and established by the server application 3a (the client application 2a preferably receives the value of T from the server application 3a). The management server 3 therefore constantly receives also the data (x2; y2) every T seconds.

So that the satellite receiver 10 and the satellite receiver 20 are able to detect the respective positions at the same time instant (i.e. so that they are synchronized with each other and therefore provide position data (x1;y1) and (x2;y2) which can be compared with each other), the satellite receiver 10 and the satellite receiver 20 preferably use a same time base, from which the period T may be started. This time base preferably is the time base of the geolocation system 400. This time base is supplied to the satellite receivers 10 and 20 by the geolocation system 400 by transmitting a timestamp Tₛₐₜ.

In each position detection period, the server application 3a preferably uses the last data (x2; y2) received in combination with the previous data in order to calculate - using known formulae - the instantaneous speed v2 of the communication device 2 (step 404). This speed v2 is also calculated along two dimensions, namely a component v2x thereof along the direction x (latitude) and a component v2y thereof along the direction y (longitude) are calculated. In this way, the server application 3a knows not only the modulus of the instantaneous speed v2 of the communication device 2 (and therefore of the user 300), but also its direction and its sense.

Preferably, in steps 401 and 403 the data relating to the geographical position of the device 1 and the device 2 are sent to the management server 3 using the protocol UDP/IP (User Datagram Protocol/Internet Protocol). This protocol is particularly advantageous for this purpose since - compared to other known protocols such as TPC/IP - it requires fewer processing resources and smaller amount of exchanged data. It uses in fact packets (called "datagrams") which are self-consistent and of the connectionless type, something which advantageously makes the processing of data by the management server 3 more rapid. As a result of this rapidity, advantageously it is possible to use particularly short time periods T so as to allow sampling of the positions of the devices 1 and 2 with a greater frequency (every few seconds).

Then the server application 3a compares the speed v2 and the speed v1 calculated for the same detection period (step 405).

As long as the two bi-dimensional speeds v1 and v2 are different in terms of their modulus and/or sense and/or direction (v1-v2≠0, namely v1x-v2x≠0 and/or v1y-v2y≠0), the server application 3a concludes that the user 300 is not on board the transport vehicle 200.

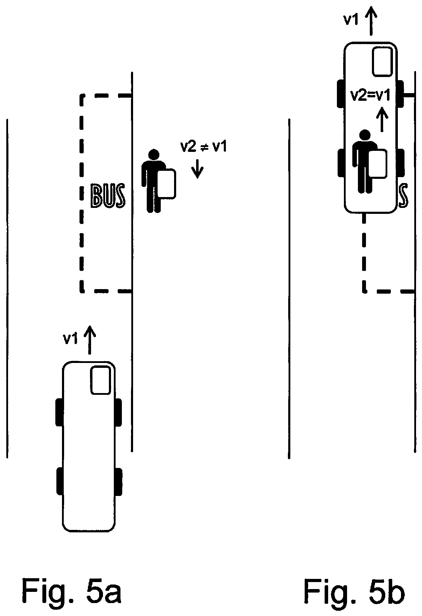

This situation is shown schematically in Figure 5a. The transport vehicle 200 (for example the bus) is travelling along the roadway at a speed v1, while the user 300 is at the bus stop, where he/she is moving at a speed v2 different from v1 both in terms of sense (for example, he/she may be walking along the pavement in the opposite sense to that of the vehicle 200) and in terms of modulus (his/her speed in general will be less than that of the vehicle 200).

Execution of the steps 401-405 is repeated with a time period T, until the server application 3a determines that the two bi-dimensional speeds v1 and v2 coincide in terms of modulus, sense and direction (v1-v2=0, namely v1x-v2x=0 and v1y-v2y=0).

This situation is shown schematically in Figure 5b. The transport vehicle 200 (for example a bus) is travelling along the roadway at a speed v1 after stopping to allow the user 300 to board the vehicle. The user 300 therefore is now moving at a speed v2 equal to v1 in terms of modulus, direction and sense.

In this case, the server application 3a concludes that the user has boarded the transport vehicle 200 (step 407). Preferably, before concluding that the user 300 has boarded, the server application 3a waits for the two bi-dimensional speeds v1 and v2 to coincide for a consecutive number of repetitions of steps 401-405. This number is preferably between 15 and 25, more preferably between 10 and 20, and for example is equal to 15. For example, considering an overall time period of 60 seconds and a time period T of 2 seconds, a total of 30 samples of v1 and V2 are obtained. If, in at least 50% of the consecutive samples, v1 and v2 coincide, the server application 3a concludes that the user 300 has boarded the transport vehicle 200.

Once it has been concluded that the user 300 has boarded the transport vehicle 200, the server application 3a may optionally instruct the client application 23a to issue to the user 300, identified by the associated unique account identifier, a notification message which indicates boarding on the transport vehicle 200 and connection to the automatic payment system 100 (step 408). The notification message (for example, a text message on the screen of the communication device 2) may also comprise additional information for the user 300, such as the tariff (or the tariffs, if there is more than one, for example urban or extra-urban tariffs) associated with the vehicle 200, the route of the vehicle 200, the type of vehicle (number, urban or extra-urban route, etc.).

Moreover, the server application 3a preferably requests from the client application 23a the payment data of the user 300 (step 409). Upon receipt of this data (step 410), the server application 3a uses said data to check with the payment system 600 whether the conditions for making the payment exist (sufficient credit, valid credentials, etc.) (step 411). If the conditions do not exist, the server application 3a preferably instructs the client application 23a to issue to the user 300 a notification message via the communication device 2 (for example a text message on the screen of the communication device 2) which informs the user that it is not possible to proceed with the automatic payment method (step 412). In this case, preferably, the client application 23a controls the operation of the satellite receiver 20 and the radio communication module 21 so that they interrupt detection and periodic transmission of the detected position data at the communication device 2.

If, instead, the outcome of the check as to the payment conditions is positive, execution of steps 401-405 is still repeated periodically.

As long as the server application 3a continues to determine that the two bi-dimensional speeds v1 and v2 coincide, it will conclude that the user 300 is still on-board the public transport vehicle 200.

When, instead, the server application 3a determines that the two bi-dimensional speeds v1 and v2 no longer coincide, the server application 3a concludes that the user 300 has got off the transport vehicle 200 (step 406). Preferably, before concluding that the user 300 has got off the transport vehicle 200, the server application 3a waits for the two bi-dimensional speeds v1 and v2 to no longer coincide for a consecutive number of repetitions of steps 401-405. This number is preferably between 5 and 10, more preferably between 7 and 13, and for example is equal to 10.

The server application 3a then proceeds with the automatic payment of the service offered to the user 300 by the public transport vehicle 200, sending a request for payment to the payment system 600 to which the user 300 is subscribed (step 414). The payment request preferably comprises the amount to be paid, which is determined by the said server application 3a on the basis of the type of vehicle 200 (determined on the basis of the identifier of the communication device 1 associated with the position data (x1; y1) received from the latter) and, in the case of a tariff dependent on the route, on the basis of the route travelled by the user 300 on board the vehicle 200.

At the end of payment, the server application 3a instructs the client application 23a to issue to the user 300 a notification message which indicates that payment has been made (step 415). The notification message (for example a text message on the screen of the communication device 2) may also comprise the ticket in electronic format (for example QR code or bar code) and, optionally, additional information useful for the user 300, such as the date and time of payment, the amount paid, details of the journey, remaining credit, etc.

The system 100 therefore prepares to detect any new journeys, returning to steps 401 and 403.

The system 100 then advantageously allows the payment of the public transport service offered by the transport vehicle 200 to be made automatically. The user 300 in fact, although being informed of the various payment steps by means of the notification messages optionally provided in steps 408, 412 and 415, must not perform substantially any payment operation. In particular, the payment of the service is particularly convenient for the user 300 who does not have to buy and validate any ticket or perform any manual payment using cash or debit card.

According to the embodiment described with reference to the flow chart in Figure 4, the payment request is sent at the end of the journey, namely upon detection of the fact that the user 300 has got off the public transport vehicle 200 (step 414). According to other non-claimed embodiments, the payment request may be sent at the start of the journey, namely when the server application 3a determines that the user 300 has boarded the vehicle 200. This may be happen, for example, in the case where the transport vehicle 200 is of the fixed-tariff type, i.e. of the type where the tariff is independent of the route travelled. In this case, the step 414 of sending the request for payment of the amount due may immediately follow the step 411, during which the server application 3a checks whether the payment conditions exist. According to this non-claimed embodiment, in the case where the fixed-tariff ticket has a certain period of validity, the server application 3a may instruct the client application 23a to issue to the user 300 a text message informing the user 300 of the time at which the period of validity expires. This message may be optionally followed by one or more reminder messages, in particular closer to the expiry time. The sending of these message preferably continues even after it has been detected that the user 300 has got off the vehicle since - within the period of validity - the user 300 could also undertake another journey on another public transport vehicle using the same ticket already paid for. If, instead, the transport vehicle 200 is not of the fixed-tariff type, i.e. the amount to be paid depends on the route made (for example for a same vehicle an urban tariff and an extra-urban tariff may be envisaged, depending on whether the route made entirely falls within an urban or a non-urban area), the step 414 of sending the payment request necessarily follows the detection of the user 300 getting off the transport vehicle 200 (step 406). In this case, the server application 3a preferably determines the route made by the user on the basis of (i) geographical position of the user 300 or the vehicle 200 at the moment when boarding was detected and (ii) geographical position of the user 300 or the vehicle 200 at the moment when getting off was detected. On the basis of this data, the stops where the user boarded and got off are determined and, based on these, the tariff which is applicable (for example if at least one of the two stops is located outside the urban area, the extra-urban tariff is applied).

According to a particularly advantageous variant, the server application 3a is configured to dynamically vary the period **T,** depending on the boarding or getting-off events detected. In particular, according to this variant, the satellite receivers 10 and 20 each use a respective sampling period T1 and T2 (in a same time base, as described above) and the period T2 may be varied dynamically by the server application 3a, subject to the condition that T2 is always equal to T1 or to a whole multiple thereof. In this way, it is ensured that the position data detected for each device 1 and 2 can be compared with each other.

For example, in the case where the transport vehicle 200 is of the fixed-tariff type, from the start of the client application 2a to detection of boarding of the user 300 on the public transport vehicle 200, the server application 3a preferably uses a first value T1=T2, comprised for example between 4 and 5 seconds. In this way, the server application 3a may detect precisely the instant and the position in which the user 300 gets on the transport vehicle 200, this allowing it to determine precisely the stop at which the user 300 got on. As described above, when boarding is detected, payment of the fixed tariff is immediately carried out. From this moment onwards the server application 3a may advantageously increase the duration of the time period T2 to a whole multiple of T1 which is higher, for example between 20 and 40 seconds. After completing payment, in fact, it is not necessary to determine exactly the stop at which the user 300 gets off the vehicle 200, since the vehicle 200 is of the fixed-tariff type. The time period T1 may instead remain unvaried, but, from among all the position data which the satellite receiver 10 continues to provide in a time period T1, the server application 3a will use only the data received at the same time as that received from the satellite receiver 20 every time period T2.

Since the collection and sending of the position data of the device 2 to the management server 3 in a time period T2 by the client application 2a is the operation which affects the power consumption thereof most, the increase of the time period T2 during the steps where frequent sampling of the device 2 is not required allows the power consumption of the client application 2a to be reduced. This is particularly advantageous since the device 2, as described above, is a portable device powered by a battery 22 which is also portable.

The above description refers to a single public transport vehicle 200 and a single user 300. However, in general the system 100 may be used in contexts were a plurality of public vehicles are used (each of them being provided with a respective portable communication device similar to the communication device 1 described above) and a plurality of users (each provided with a respective portable communication device similar to the communication device 2). In this scenario, preferably, in step 405 the management server 3 preferably compares the speed v1 of each public vehicle with the speed v2 of only the users who are in the vicinity of the public vehicle. For example, the management server 3 considers the speeds v2 of the users only whose position (x2;y2) is at a distance L smaller than or equal to a maximum distance Lₘₐₓ from the position (x1;y1) of the public vehicle. The maximum distance Lₘₐₓ may for example correspond substantially to the length of the public transport vehicle. For example, the distance Lₘₐₓ may vary between 5 m and 30 m.

The automatic payment method described above with reference to Figure 4 may have a number of variants, depending on the type of public transport vehicle 200.

In particular, in the example described above, the management server 3 uses the position data relating to the public transport vehicle 200 and the user 300 to determine not only the event where the user 300 boards the vehicle 200, but also the event where the user 300 gets off the vehicle 200, following which event it sends the payment request to the payment system 600. This allows the management server 3 to determine the correct amount to be paid.

According to other variants, the amount to be paid may be determined by a device outside the system 100, for example a device (a taximeter in the case of a taxi) also installed on board the vehicle 200, connected to the communication device 1 and able to determine the amount to be paid and, at the end of the journey, transmit it to the communication device 1 so that the latter may forward it to the management server 3 for the payment request.

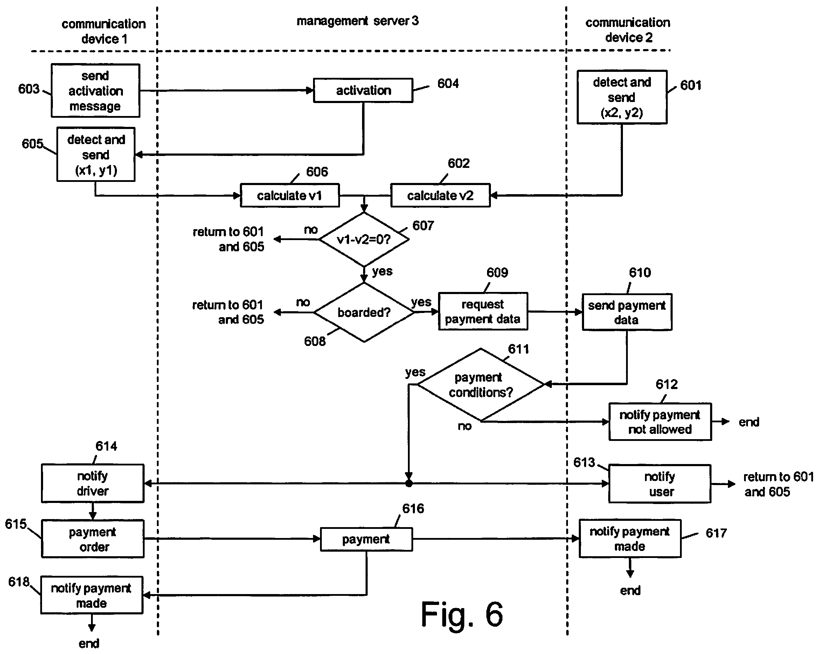

Figure 6 is a flow chart relating to a variant of the method, which is particularly advantageous in the case where the public transport vehicle 200 is a taxi.

In this case also, the first communication device 1 is fixed in a non-removable manner to the taxi 200, while the user 300 carries on his/her person the communication device 2 (for example a smartphone) on which the client application 23a has been installed and activated by the user with the personal data, payment details and unique account identifier supplied at the time of registration as described above.

According to this variant, the communication device 1 is connected to the taximeter of the taxi 200 and has a pushbutton which can be accessed by the driver of the taxi 200.

When the user 300 decides to pay for a journey in a taxi using the automatic payment method of the present invention (at the time of booking the taxi or when boarding the taxi), he/she preferably activates on his/her communication device 2 the client application 23a which starts to control operation of the satellite receiver 20 and the radio communication module 21 so that they start to detect periodically every T seconds the geographical position of the device 2 (substantially coinciding with that of the user 300) by interacting with the geolocation system 400 and to send data relating to each position detected to the management server 3 via the communication network 500 (step 601).

In each position detection period, the server application 3a preferably uses the last data received in combination with the previous data in order to calculate - using known formulae - the instantaneous speed v2 of the communication device 2 (step 602).

The steps 601-602 are substantially identical to the steps 403-404 of the flow chart shown in Figure 4. Therefore the detailed description thereof will not be repeated.

When the user 300 gets into the taxi 200 and says that he/she wishes to pay by means of the automatic payment method according to the present invention, the driver of the taxi 200 preferably presses the pushbutton on the communication device 1. When the pushbutton is pressed, the communication device 1 (in particular, the radio communication module 11) preferably transmits an activation message to the management server 3 (step 603).

In response, the server application 3a executed by the management server 3 is preferably activated (step 604) and starts to control operation of the satellite receiver 10 and the radio communication module 11 so that these start to detect every T seconds the geographical position of the device 1 (substantially coinciding with that of the taxi 200) by interacting with the geolocation system 400 and to send the data for each detected position to the management server 3 via the communication network 500 (step 605).

In each position detection period, the server application 3a preferably uses the last data received in combination with the previous data in order to calculate - using known formulae - the instantaneous speed v1 of the communication device 1 (step 606).

The steps 605-606 are substantially identical to the steps 401-402 of the flow chart shown in Figure 4. Therefore the detailed description thereof will not be repeated.

Then the server application 3a compares the speed v2 and the speed v1 calculated for the same detection period (step 607).

In particular, during the step 607, the server application 3a preferably compares the speed v1 of the taxi 200 with the speed v2 of all the communication devices, the respective client applications of which are providing the respective positions and are situated in the proximity of the taxi 200. In particular, the server application 3a considers the speed v2 of only the communication devices, the position (x2;y2) of which is situated at a distance L smaller than or equal to a maximum distance Lₘₐₓ from the position (x1;y1) of the taxi 200. The maximum distance L Lₘₐₓ may be for example 2-3 m.

As long as, for each pair v1-v2 considered in the step 607, the two bi-dimensional speeds v1 and v2 are different in terms of their modulus and/or sense and/or direction (v1-v2≠0, namely v1x-v2x≠0 and/or v1y-v2y≠0), the server application 3a concludes that the user 300 is not yet on board the taxi 200.

Execution of steps 601-602 and 606-606 is repeated with a time period **T,** until the server application 3a determines that, for each of the pairs v1, v2 considered in the step 607, the two bi-dimensional speeds v1 and v2 coincide in terms of their modulus, sense and direction (v1-v2=0, namely v1x-v2x=0 and v1y-v2y=0). **In** this case, the server application 3a concludes that the user 300 of the communication device 2 which - among those considered in step 607 - has a speed v2 coinciding with v1, had boarded the taxi 200 (step 608). Preferably, before concluding that the user 300 has boarded the taxi 200, the server application 3a waits for the two bi-dimensional speeds v1 and v2 to coincide for a consecutive number of repetitions of the steps 601-602 and 605-607. This number is preferably between 15 and 25, more preferably between 10 and 20, and for example is equal to 15.

Once concluded that the user 300 has boarded the taxi 200, the server application 3a executed by the management server preferably requests from the client application 23a the payment data of the user 300 (step 609). Upon receipt of this data (step 610), the server application 3a uses said data to check with the payment system 600 whether the conditions for making the payment exist (sufficient credit, valid credentials, etc.) (step 611). **If** the conditions do not exist, the server application 3a preferably instructs the client application 23a to issue to the user 300 a notification message via the communication device 2 (for example a text message on the screen of the communication device 2) which informs the user that it is not possible to proceed with the automatic payment method (step 612).

**If** instead the outcome of the payment conditions check is positive, the server application 3a preferably instructs the client application 23a to issue to the user 300 a notification message which signals connection to the automatic payment system 100 (step 613) and, substantially at the same time, sends to the communication device 1 a notification message which also signals to the driver of the taxi 200 connection to the automatic payment system 100 (step 614).

When the journey has ended, the driver of the taxi 200 preferably presses the pushbutton on the communication device 1. When the pushbutton is pressed, the communication device 1 (in particular the radio communication module 11) preferably transmits to the management server 3 a payment order (step 615). The payment order preferably comprises the amount to be paid, as calculated by the taximeter connected to the communication device 1.

The server application 3a then proceeds with automatic payment of the service offered to the user 300 by the taxi 200, sending a payment request to the payment system 600 to which the user 300 subscribed (step 616).

It may be noted that, also according to this embodiment, once boarding on the taxi 200 is detected, it is no longer necessary to sample with a high frequency the relative position of user 300 and taxi 200, since the amount to be paid is provided by the taximeter. As in the case of a transport vehicle with a fixed tariff, therefore, following detection of boarding of the taxi 200, the server application 3a preferably increases the duration of the period T2 used by the satellite receiver 20, for example from 4-5 seconds to 20-40 seconds (subject to the condition that T2 is always a whole multiple of the period T1 which the satellite receiver 10 continues in the meantime to use, as described above). In this way, as discussed above, the battery power used by the client application 2a (and therefore by the entire device 2) is advantageously reduced.

At the end of payment, the server application 3a instructs the client application 23a to issue to the user 300 a notification message which indicates that payment has been made (step 617). The notification message (for example a text message on the screen of the communication device 2) may also comprise additional information useful for the user 300, such as the date and time of payment, the amount paid, details of the journey, remaining credit, etc. This notification message is substantially valid as a receipt of payment made.

The server application 3a moreover preferably sends a notification that payment has been made also to the driver of the taxi 200 via the communication device 1 (step 618). In this way, the driver may check that the amount has been received and that the amount received is correct.

Preferably, according to this variant, the communication device 1 is provided with a software application which allows the driver to check periodically (for example at the end of the day) the list of journeys made and paid for by means of the automatic payment system 100.

According to this variant also, therefore, the system 100 advantageously allows the payment of the public transport service offered by the taxi 200 to be made automatically. The user 300 in fact, although being informed of the various payment steps by means of the notification messages optionally provided, must not perform substantially any manual payment operation using cash or debit card.

## Claims

1. A system (100) for automatic payment of a public transport service offered by a public transport vehicle (200), said system (100) comprising:
- a management server (3);
- a first communication device (1) suitable for being installed on board said public transport vehicle (200) and configured to periodically send first data indicative of the position of said public transport vehicle (200) to said management server (3);
- a second communication device (2) portable by a user (300), said second communication device (2) being configured to periodically send second data indicative of the position of said user (300) to said management server (3),
wherein said first communication device (1) and said second communication device (2) are configured to periodically send said first data and said second data in a synchronized manner to said management server (3), and
wherein said management server (3) is configured to periodically determine a first speed v1 of said public transport vehicle (200) based on said received first data, periodically determine a second speed v2 of said user (300) based on said received second data, and:
- determine that said user (300) has boarded said public transport vehicle (200) when said periodically determined first speed v1 and said periodically determined second speed v2, after being different, coincide;
- determine that said user (300) has got off said public transport vehicle (200) when said periodically determined first speed v1 and said periodically determined second speed v2 no longer coincide;
- when it determines that said user (300) has got off said public transport vehicle (200), calculate an amount to be paid based on the position of said public transport vehicle (200) or said user (300) when it determined that said user (300) has boarded said public transport vehicle (200); and on the position of said public transport vehicle (200) or said user (300) when it determined that said user (300) has got off said public transport vehicle (200); and
- send a payment request to a payment system (600) to which said user (300) is subscribed.

2. The system (100) according to claim 1, wherein said first communication device (1) and said second communication device (2) are configured to periodically provide said first data and said second data at a time period T1 and a time period T2, respectively, in a synchronized manner, said management server (3) being configured to vary dynamically the duration of said time period T2, subject to the condition that said time period T2 is an integer multiple of said time period T1.

3. The system (100) according to claim 2, wherein said management server (3) is configured to increase said time period T2 when it detects that said user has boarded said public transport vehicle (200).

4. The system (100) according to claim 1, wherein said management server (3) is configured to send said payment request, comprising said amount to be paid when it detects that said user has got off said public transport vehicle (200).

5. The system (100) according to any one of the preceding claims, wherein said first communication device (1) and said second communication device (2) are provided with:
- respective satellite receivers (10, 20) configured to detect said geographical position of said public transport vehicle (200) and said user (300), respectively, by interacting with a geolocation system (400); and
- respective radio communication modules (11, 21) configured to transmit said first data and said second data, respectively, to said management server (3) via radio by means of a communication network (500).

6. The system (100) according to any one of the preceding claims, wherein said second communication device (2) comprises a processor (23) and a client software application (23a) suitable for being run by said processor (23), said client software application (23a) being configured so that, when it is run by said processor (23), it operates said second communication device (2) so as to provide said second data indicative of the position of said user (300), said client application (23a) being started when said user (300) decides to use said automatic payment system of said public transport service.

7. The system (100) according to any one of the preceding claims, wherein said first data comprises first geographical coordinates (x1; y1) of said first communication device (1) and said second data comprises second geographical coordinates (x2; y2) of said second communication device (2).

8. The system (100) according to any one of the preceding claims, wherein said management server (3) is configured to determine a first two-dimensional speed v1 of said public transport vehicle (200), determine a second two-dimensional speed v2 of said user (300) and determine that:
- said user (300) has boarded said public transport vehicle (200) if said first two-dimensional speed v1 and said second two-dimensional speed v2 coincide as to their modulus, sense and direction for a first number of consecutive repeated acquisitions of said first data and second data and calculations of said first speed v1 and said second speed v2; and
- said user (300) has got off said public transport vehicle (200) if said first two-dimensional speed v1 and said second two-dimensional speed v2 do not coincide as to their modulus and/or sense and/or direction for a second number of repeated acquisitions of said first data and second data and calculations of said first speed v1 and said second speed v2.

9. A method for automatic payment of a public transport service offered by a public transport vehicle (200), said method comprising:
- by means of a first communication device (1) installed on board said public transport vehicle (200), periodically sending first data indicative of the position of said public transport vehicle (200) to a management server (3);
- by means of a second communication device (2) portable by a user (300), periodically sending second data indicative of the position of said user (300) to said management server (3);
wherein said first communication device (1) and said second communication device (2) periodically send said first data and said second data in a synchronized manner to the management server (3); and
- at the management server (3), periodically determining a first speed v1 of said public transport vehicle (200) based on said received first data, periodically determining a second speed v2 of said user (300) based on said received second data, and:
- determining that said user (300) has boarded said public transport vehicle (200) when said periodically determined first speed v1 and said periodically determined second speed v2, after being different, coincide;
- determining that said user (300) has got off said public transport vehicle (200) when said periodically determined first speed v1 and said periodically determined second speed v2 no longer coincide;
- when it is determined that said user (300) has got off said public transport vehicle (200), calculating an amount to be paid based on the position of said public transport vehicle (200) or said user (300) when it determined that said user (300) has boarded said public transport vehicle (200); and on the position of said public transport vehicle (200) or said user (300) when it determined that said user (300) has got off said public transport vehicle (200);
- and, sending a payment request to a payment system (600) to which said user (300) is subscribed.

## Patentansprüche

1. System (100) zur automatischen Bezahlung eines öffentlichen Transportdienstes, der von einem öffentlichen Transportfahrzeug (200) angeboten wird, das System (100) umfassend:
- einen Verwaltungsserver (3);
- eine erste Kommunikationsvorrichtung (1), die dazu geeignet ist, an Bord des öffentlichen Transportfahrzeugs (200) installiert zu sein, und dazu konfiguriert ist, periodisch erste Daten, welche die Position des öffentlichen Transportfahrzeugs (200) anzeigen, an den Verwaltungsserver (3) zu senden;
- eine zweite Kommunikationsvorrichtung (2), die von einem Benutzer (300) getragen werden kann, wobei die zweite Kommunikationsvorrichtung (2) dazu konfiguriert ist, periodisch zweite Daten, welche die Position des Benutzers (300) anzeigen, an den Verwaltungsserver (3) zu senden,
wobei die erste Kommunikationsvorrichtung (1) und die zweite Kommunikationsvorrichtung (2) dazu konfiguriert sind, periodisch die ersten Daten und die zweiten Daten auf eine synchronisierte Weise an den Verwaltungsserver (3) zu senden, und
wobei der Verwaltungsserver (3) dazu konfiguriert ist, periodisch eine erste Geschwindigkeit v1 des öffentlichen Transportfahrzeugs (200) basierend auf den empfangenen ersten Daten zu bestimmen, periodisch eine zweite Geschwindigkeit v2 des Benutzers (300) basierend auf den empfangenen zweiten Daten zu bestimmen, und:
- zu bestimmen, dass der Benutzer (300) in das öffentliche Transportfahrzeug (200) eingestiegen ist, wenn die periodisch bestimmte erste Geschwindigkeit v1 und die periodisch bestimmte zweite Geschwindigkeit v2, nachdem sie unterschiedlich waren, übereinstimmen;
- zu bestimmen, dass der Benutzer (300) aus dem öffentlichen Transportfahrzeug (200) ausgestiegen ist, wenn die periodisch bestimmte erste Geschwindigkeit v1 und die periodisch bestimmte zweite Geschwindigkeit v2, nicht mehr übereinstimmen;
- wenn er bestimmt, dass der Benutzer (300) aus dem öffentlichen Transportfahrzeug (200) ausgestiegen ist, einen zu bezahlenden Betrag zu berechnen, basierend auf der Position des öffentlichen Transportfahrzeugs (200) oder des Benutzers (300) zum Zeitpunkt der Bestimmung, dass der Benutzer (300) in das öffentliche Transportfahrzeug (200) eingestiegen ist, und der Position des öffentlichen Transportfahrzeugs (200) oder des Benutzers (300) zum Zeitpunkt der Bestimmung, dass der Benutzer (300) aus dem öffentlichen Transportfahrzeug (200) ausgestiegen ist; und
- eine Zahlungsaufforderung an ein Zahlungssystem (600) zu senden, bei dem der Benutzer (300) angemeldet ist.

2. System (100) nach Anspruch 1, wobei die erste Kommunikationsvorrichtung (1) und die zweite Kommunikationsvorrichtung (2) dazu konfiguriert sind, periodisch die ersten Daten und die zweiten Daten in einem Zeitraum T1 bzw. einem Zeitraum T2 auf synchronisierte Weise bereitzustellen, wobei der Verwaltungsserver (3) dazu konfiguriert ist, die Dauer des Zeitraums T2 dynamisch zu variieren, unter der Bedingung, dass der Zeitraum T2 ein ganzzahliges Mehrfaches des Zeitraums T1 ist.

3. System (100) nach Anspruch 2, wobei der Verwaltungsserver (3) dazu konfiguriert ist, den Zeitraum T2 zu erhöhen, wenn er erkennt, dass der Benutzer in das öffentliche Transportfahrzeug (200) eingestiegen ist.

4. System (100) nach Anspruch 1, wobei der Verwaltungsserver (3) dazu konfiguriert ist, die Zahlungsaufforderung, die den zu zahlenden Betrag umfasst, zu senden, wenn er erkennt, dass der Benutzer aus dem öffentlichen Transportfahrzeug (200) ausgestiegen ist.

5. System (100) nach einem der vorhergehenden Ansprüche,
wobei die erste Kommunikationsvorrichtung (1) und die zweite Kommunikationsvorrichtung (2) mit Folgendem versehen sind:
- jeweiligen Satellitenempfängern (10, 20), die dazu konfiguriert sind, die geographische Position des öffentlichen Transportfahrzeugs (200) bzw. des Benutzers (300) durch Interagieren mit einem Geolokalisierungssystem (400) zu erkennen; und
- jeweilige Funkkommunikationsmodule (11, 21), die dazu konfiguriert sind, die ersten Daten bzw. die zweiten Daten über Funk mittels eines Kommunikationsnetzwerks (500) an den Verwaltungsserver (3) zu senden.

6. System (100) nach einem der vorhergehenden Ansprüche, wobei die zweite Kommunikationsvorrichtung (2) einen Prozessor (23) und eine Client-Softwareanwendung (23a), die dazu geeignet ist, von dem Prozessor (23) ausgeführt zu werden, umfasst, wobei die Client-Softwareanwendung (23a) so konfiguriert ist, dass sie, wenn sie von dem Prozessor (23) ausgeführt wird, die zweite Kommunikationsvorrichtung (2) dazu betreibt, die zweiten Daten, welche die Position des Benutzers (300) anzeigen, bereitzustellen, wobei die Client-Anwendung (23a) gestartet wird, wenn der Benutzer (300) sich entscheidet, das automatische Zahlungssystem des öffentlichen Transportdienstes zu verwenden.

7. System (100) nach einem der vorhergehenden Ansprüche, wobei die ersten Daten erste geographische Koordinaten (x1; y1) der ersten Kommunikationsvorrichtung (1) umfassen, und die zweiten Daten zweite geographische Koordinaten (x2; y2) der zweiten Kommunikationsvorrichtung (2) umfassen.

8. System (100) nach einem der vorhergehenden Ansprüche, wobei der Verwaltungsserver (3) dazu konfiguriert ist, eine erste zweidimensionale Geschwindigkeit v1 des öffentlichen Transportfahrzeugs (200) zu bestimmen, eine zweite zweidimensionale Geschwindigkeit v2 des Benutzers (300) zu bestimmen, und zu bestimmen, dass
- der Benutzer (300) in das öffentliche Transportfahrzeug (200) eingestiegen ist, falls die erste zweidimensionale Geschwindigkeit v1 und die zweite zweidimensionale Geschwindigkeit v2 in Bezug auf ihren Modulus, ihre Wahrnehmung und ihre Richtung für eine erste Anzahl von aufeinanderfolgenden wiederholten Erfassungen der ersten Daten und der zweiten Daten und Berechnungen der ersten Geschwindigkeit v1 und der zweiten Geschwindigkeit v2 übereinstimmen; und
- der Benutzer (300) aus dem öffentlichen Transportfahrzeug (200) ausgestiegen ist, falls die erste zweidimensionale Geschwindigkeit v1 und die zweite zweidimensionale Geschwindigkeit v2 in Bezug auf ihren Modulus und/oder ihre Ausrichtung und/oder ihre Richtung für eine zweite Anzahl von wiederholten Erfassungen der ersten Daten und der zweiten Daten und Berechnungen der ersten Geschwindigkeit v1 und der zweiten Geschwindigkeit v2 nicht übereinstimmen.

9. Verfahren zur automatischen Bezahlung eines öffentlichen Transportdienstes, der von einem öffentlichen Transportfahrzeug (200) angeboten wird, das Verfahren umfassend:
- mittels einer ersten Kommunikationsvorrichtung (1), die an Bord des öffentlichen Transportfahrzeugs (200) installiert ist, periodisches Senden von ersten Daten, welche die Position des öffentlichen Transportfahrzeugs (200) anzeigen, an einen Verwaltungsserver (3);
- mittels einer zweiten Kommunikationsvorrichtung (2), die von einem Benutzer (300) getragen werden kann, periodisches Senden von zweiten Daten, welche die Position des Benutzers (300) anzeigen, an den Verwaltungsserver (3);
wobei die erste Kommunikationsvorrichtung (1) und die zweite Kommunikationsvorrichtung (2) periodisch die ersten Daten und die zweiten Daten auf eine synchronisierte Weise an den Verwaltungsserver (3) senden, und
- an dem Verwaltungsserver (3), periodisches Bestimmen einer ersten Geschwindigkeit v1 des öffentlichen Transportfahrzeugs (200) basierend auf den empfangenen ersten Daten, periodisches Bestimmen einer zweiten Geschwindigkeit v2 des Benutzers (300) basierend auf den empfangenen zweiten Daten, und:
- Bestimmen, dass der Benutzer (300) in das öffentliche Transportfahrzeug (200) eingestiegen ist, wenn die periodisch bestimmte erste Geschwindigkeit v1 und die periodisch bestimmte zweite Geschwindigkeit v2, nachdem sie unterschiedlich waren, übereinstimmen;
- Bestimmen, dass der Benutzer (300) aus dem öffentlichen Transportfahrzeug (200) ausgestiegen ist, wenn die periodisch bestimmte erste Geschwindigkeit v1 und die periodisch bestimmte zweite Geschwindigkeit v2, nicht mehr übereinstimmen;
- wenn bestimmt wird, dass der Benutzer (300) aus dem öffentlichen Transportfahrzeug (200) ausgestiegen ist, Berechnen eines zu bezahlenden Betrags basierend auf der Position des öffentlichen Transportfahrzeugs (200) oder des Benutzers (300) zum Zeitpunkt der Bestimmung, dass der Benutzer (300) in das öffentliche Transportfahrzeug (200) eingestiegen ist, und der Position des öffentlichen Transportfahrzeugs (200) oder des Benutzers (300) zum Zeitpunkt der Bestimmung, dass der Benutzer (300) aus dem öffentlichen Transportfahrzeug (200) ausgestiegen ist;
- und Senden einer Zahlungsaufforderung an ein Zahlungssystem (600), bei dem der Benutzer (300) angemeldet ist.

## Revendications

1. Système (100) de paiement automatique d'un service de transport public offert par un véhicule de transport public (200), ledit système (100) comprenant :
- un serveur de gestion (3) ;
- un premier dispositif de communication (1) apte à être installé à bord dudit véhicule de transport public (200) et configuré pour envoyer périodiquement de premières données représentatives de la position dudit véhicule de transport public (200) audit serveur de gestion (3) ;
- un deuxième dispositif de communication (2) portable par un utilisateur (300), ledit deuxième dispositif de communication (2) étant configuré pour envoyer périodiquement de deuxièmes données représentatives de la position dudit utilisateur (300) audit serveur de gestion (3),
dans lequel ledit premier dispositif de communication (1) et ledit deuxième dispositif de communication (2) sont configurés pour envoyer périodiquement lesdites premières données et lesdites deuxièmes données de manière synchronisée audit serveur de gestion (3), et
dans lequel ledit serveur de gestion (3) est configuré pour déterminer périodiquement une première vitesse v1 dudit véhicule de transport public (200) sur la base desdites premières données reçues, déterminer périodiquement une deuxième vitesse v2 dudit utilisateur (300) sur la base desdites deuxièmes données reçues, et :
- déterminer que ledit utilisateur (300) est monté à bord dudit véhicule de transport public (200) lorsque ladite première vitesse v1 déterminée périodiquement et ladite deuxième vitesse v2 déterminée périodiquement, après avoir été différentes, coïncident ;
- déterminer que ledit utilisateur (300) est descendu dudit véhicule de transport public (200) lorsque ladite première vitesse v1 déterminée périodiquement et ladite deuxième vitesse v2 déterminée périodiquement ne coïncident plus ;
- lorsqu'il détermine que ledit utilisateur (300) est descendu dudit véhicule de transport public (200), calculer un montant à payer sur la base de la position dudit véhicule de transport public (200) ou dudit utilisateur (300) lorsqu'il a déterminé que ledit utilisateur (300) est monté à bord dudit véhicule de transport public (200) ; et de la position dudit véhicule de transport public (200) ou dudit utilisateur (300) lorsqu'il a déterminé que ledit utilisateur (300) est descendu dudit véhicule de transport public (200) ; et
- envoyer une demande de paiement à un système de paiement (600) auquel ledit utilisateur (300) est abonné.

2. Système (100) selon la revendication 1, dans lequel ledit premier dispositif de communication (1) et ledit deuxième dispositif de communication (2) sont configurés pour fournir périodiquement lesdites premières données et lesdites deuxièmes données selon une première période de temps T1 et une deuxième période de temps T2, respectivement, de manière synchronisée, ledit serveur de gestion (3) étant configuré pour faire varier dynamiquement la durée de ladite deuxième période de temps T2, sous réserve que ladite période de temps T2 soit un multiple entier de ladite période de temps T1.

3. Système (100) selon la revendication 2, dans lequel ledit serveur de gestion (3) est configuré pour augmenter ladite période de temps T2 lorsqu'il détecte que ledit utilisateur est monté à bord dudit véhicule de transport public (200).

4. Système (100) selon la revendication 1, dans lequel ledit serveur de gestion (3) est configuré pour envoyer ladite demande de paiement, comprenant ledit montant à payer, lorsqu'il détecte que ledit utilisateur est descendu dudit véhicule de transport public (200).

5. Système (100) selon l'une quelconque des revendications précédentes,
dans lequel ledit premier dispositif de communication (1) et ledit deuxième dispositif de communication (2) sont pourvus de :
- récepteurs satellites (10, 20) respectifs configurés pour détecter ladite position géographique dudit véhicule de transport public (200) et dudit utilisateur (300), respectivement, en interaction avec un système de géolocalisation (400) ; et
- modules (11, 21) respectifs de communication radio configurés pour transmettre lesdites premières données et lesdites deuxièmes données, respectivement, audit serveur de gestion (3) par radio au moyen d'un réseau de communication (500).

6. Système (100) selon l'une quelconque des revendications précédentes, dans lequel ledit deuxième dispositif de communication (2) comprend un processeur (23) et une application logicielle cliente (23a) apte à être exécutée par ledit processeur (23), ladite application logicielle cliente (23a) étant configurée de sorte que, lorsqu'elle est exécutée par ledit processeur (23), elle fasse fonctionner ledit deuxième dispositif de communication (2) de manière à fournir lesdites deuxièmes données représentatives de la position dudit utilisateur (300), ladite application cliente (23a) étant lancée lorsque ledit utilisateur (300) décide d'utiliser ledit système de paiement automatique dudit service de transport public.

7. Système (100) selon l'une quelconque des revendications précédentes, dans lequel lesdites premières données comprennent des premières coordonnées géographiques (x1 ; y1) dudit premier dispositif de communication (1) et lesdites deuxièmes données comprennent des deuxièmes coordonnées géographiques (x2 ; y2) dudit deuxième dispositif de communication (2).

8. Système (100) selon l'une quelconque des revendications précédentes, dans lequel ledit serveur de gestion (3) est configuré pour déterminer une première vitesse bidimensionnelle v1 dudit véhicule de transport public (200), déterminer une deuxième vitesse bidimensionnelle v2 dudit utilisateur (300) et déterminer que :
- ledit utilisateur (300) est monté à bord dudit véhicule de transport public (200) si ladite première vitesse bidimensionnelle v1 et ladite deuxième vitesse bidimensionnelle v2 coïncident quant à leur module, leur sens et leur direction pendant un premier nombre d'acquisitions répétées consécutives desdites premières données et desdites deuxièmes données, et de calculs de ladite première vitesse v1 et ladite deuxième vitesse v2 ; et
- ledit utilisateur (300) est descendu dudit véhicule de transport public (200) si ladite première vitesse bidimensionnelle v1 et ladite deuxième vitesse bidimensionnelle v2 ne coïncident pas quant à leur module et/ou leur sens et/ou leur direction pendant un deuxième nombre d'acquisitions répétées desdites premières données et desdites deuxièmes données, et de calculs de ladite première vitesse v1 et ladite deuxième vitesse v2.

9. Procédé de paiement automatique d'un service de transport public offert par un véhicule de transport public (200), ledit procédé comprenant :
- au moyen d'un premier dispositif de communication (1) installé à bord dudit véhicule de transport public (200), l'envoi périodique de premières données représentatives de la position dudit véhicule de transport public (200) à un serveur de gestion (3) ;
- au moyen d'un deuxième dispositif de communication (2) portable par un utilisateur (300), l'envoi périodique de deuxièmes données représentatives de la position dudit utilisateur (300) audit serveur de gestion (3) ;
dans lequel ledit premier dispositif de communication (1) et ledit deuxième dispositif de communication (2) envoient périodiquement lesdites premières données et lesdites deuxièmes données de manière synchronisée audit serveur de gestion (3) ; et
- au niveau du serveur de gestion (3), la détermination périodique d'une première vitesse v1 dudit véhicule de transport public (200) sur la base desdites premières données reçues, la détermination périodique d'une deuxième vitesse v2 dudit utilisateur (300) sur la base desdites deuxièmes données reçues, et :
- la détermination que ledit utilisateur (300) est monté à bord dudit véhicule de transport public (200) lorsque ladite première vitesse v1 déterminée périodiquement et ladite deuxième vitesse v2 déterminée périodiquement, après avoir été différentes, coïncident ;
- la détermination que ledit utilisateur (300) est descendu dudit véhicule de transport public (200) lorsque ladite première vitesse v1 déterminée périodiquement et ladite deuxième vitesse v2 déterminée périodiquement ne coïncident plus ;
- lorsqu'il est déterminé que ledit utilisateur (300) est descendu dudit véhicule de transport public (200), calculer un montant à payer sur la base de la position dudit véhicule de transport public (200) ou dudit utilisateur (300) lorsqu'il a été déterminé que ledit utilisateur (300) est monté à bord dudit véhicule de transport public (200) ; et de la position dudit véhicule de transport public (200) ou dudit utilisateur (300) lorsqu'il a été déterminé que ledit utilisateur (300) est descendu dudit véhicule de transport public (200) ;
- et l'envoi d'une demande de paiement à un système de paiement (600) auquel ledit utilisateur (300) est abonné.
